# EUROPÄISCHE PATENTSCHRIFT

(11) **EP 1 701 421 B1**
(45) Veröffentlichungstag und Bekanntmachung des Hinweises auf die Patenterteilung: **22.07.2009**
(21) Anmeldenummer: 06003546.6
(22) Anmeldetag: 22.02.2006
(51) Int. Cl.: H02G 3/04

(54) **Vorrichtung zur lösbaren Befestigung von Formteilen an Kabelkanälen**
Apparatus for releasably fixing molded parts of cable ducts
Dispositif pour fixation amovible de pièces moulées de goulottes

(30) Priorität: 12.03.2005 DE 202005004012 U
(43) Veröffentlichungstag der Anmeldung: 13.09.2006
(73) Patentinhaber: Tehalit GmbH, 67716 Heltersberg (DE)
(72) Erfinder: Nauerz, Uwe, 66851 Steinalben (DE); Pfeifer, Christoph, 67707 Schopp (DE)
(74) Vertreter: Patentanwälte Möll, Bitterich & Dr. Keller

(56) Entgegenhaltungen:
- GB-A- 717 629

## Beschreibung

Die Erfindung betrifft Vorrichtungen zur lösbaren Befestigung von Formteilen auf Unterteilen von Kabelkanälen gemäß dem Oberbegriff des Anspruchs 1.

Kabelkanäle, bestehend aus einem U- oder C-förmigen Unterteil und lösbar aufrastbaren Oberteilen, werden in Abschnitten von z. B. 2 m Länge geliefert und verlegt. Erfolgt die Verlegung in gerade Linie, sind diese Unterteile und Oberteile ausreichend. Sobald jedoch eine Richtungsänderung oder Abzweigung erfolgt, sind besondere Formteile erforderlich. Hier unterscheidet man Klammern, Brücken, Innenecken, Außenecken, Flachecken, T-Stücke oder Kreuzstücke.

Die Formteile sollen möglichst einfach und schnell montierbar sein. Dies wird in vielen Fällen durch die Verwendung von federnden Elementen wie Rastnasen, Rasthaken und dergleichen erreicht. Gleichzeitig sollen die Formteile jedoch auch möglichst fest sitzen und beispielsweise beim Anstoßen nicht gleich abfallen. Dies wird durch die federnden Rastmittel jedoch nicht erreicht.

Es sind auch schon Formteile bekannt, die zunächst auf das Kanalunterteil aufgerastet und anschließend mit Hilfe von Gewindeschrauben befestigt werden. Man vergleiche GB 717 629, FR 27 56 431 A oder DE 297 22 471 U. Bei diesen Lösungen übernehmen allein die Schrauben die Haltefunktion, indem sie eine formschlüssige Verbindung zu dem Kanalunterteil herstellen. Die ebenfalls vorgesehenen Rastelemente sind überflüssig.

Der vorliegenden Erfindung liegt die Aufgabe zugrunde, die bekannten Rastmittel derart weiterzuentwickeln, dass ein sicherer Halt der Formteile ermöglicht wird, ohne dass das Montieren und Demontieren darunter leidet.

Diese Aufgabe wird gelöst durch eine Vorrichtung mit den Merkmalen des Anspruchs 1.

Die vorliegende Erfindung behält die bewährten federnden Rastmittel bei, dank deren die Formteile einfach und schnell montiert und demontiert werden können. Sobald jedoch die Formteile montiert sind, wird die federnde Funktion der Rastmittel außer Kraft gesetzt, indem hinter dem Rastmittel eine Blockierschraube eingeschraubt wird. Die Blockierschraube blockiert die federnde Bewegung des Rastmittels, hat also keine Verbindung mit dem Kanalunterteil.

Gemäß einer vorteilhaften Weiterbildung der Erfindung ist die Blockierschraube durch wenigstens eine Stützwand gehalten und gestützt. Dabei ist eine der Stützwände an dem federnden Rastmittel selbst angeformt, und zwar so, dass sie das Federn des Rastmittels nicht behindert. Diese Stützwände halten die Blockierschraube in Position, behindern jedoch nicht die federnde Funktion der Rastmittel, sobald die Blockierschraube entfernt wird.

Anhand der Zeichnung soll die Erfindung in Form eines Ausführungsbeispiels näher erläutert werden. Es zeigen
- Fig. 1: in isometrischer Darstellung einen Blick auf die Innenseite eines Formtells in Form eines Außenecks und
- Fig. 2: in vergrößerter Darstellung eine Draufsicht auf ein erfindungsgemäßes Funktionselement.

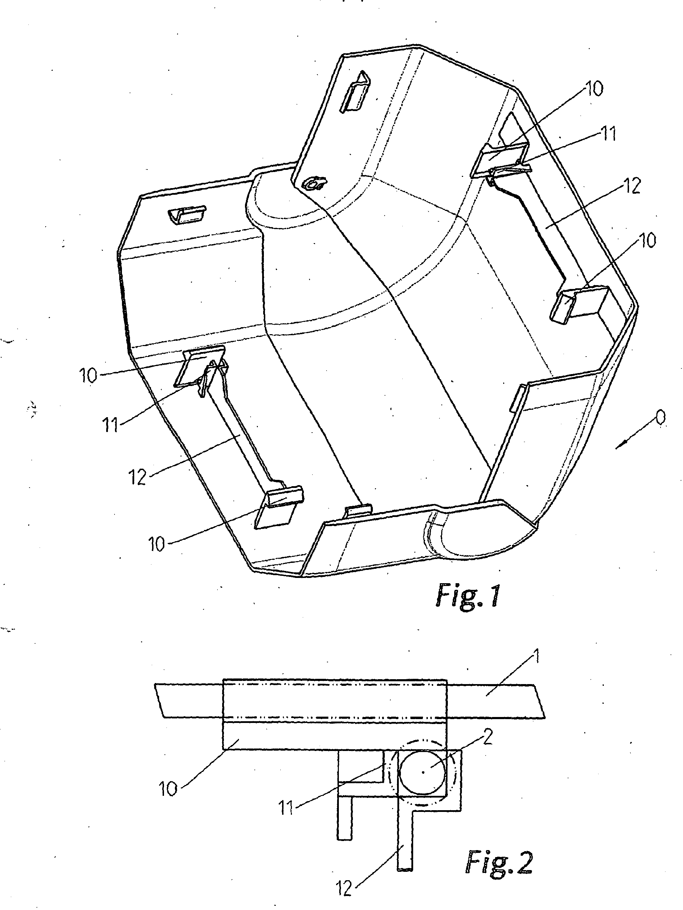

Fig. 1 zeigt in isometrischer Darstellung eine Ansicht der Innenseite eines Außenecks als Beispiel für ein Formteil 0. Zur Befestigung des Formteils 0 auf dem Unterteil eines Kabelkanals (nicht dargestellt) sind an seiner Innenseite federnde Rasthaken 10 vorgesehen. Dank dieser Rasthaken 10 kann das Formteil 0 auf den Kabelkanal aufgerastet werden, wobei die Nasen der Rasthaken 10 sich hinter einer Halteleiste 1 (Fig. 2) am Kanalunterteil verhaken. Dank der federnden Eigenschaften der Rasthaken 10 kann das Formteil 0 vom Kanalunterteil auch wieder abgezogen werden, wenn auch mit höherer Abzugskraft.

Um einen festen und dauerhaften Sitz des Formteils 0 am Kabelkanal zu erreichen, wird von der Sichtseite des Formteils 0 aus hinter dem Rasthaken 10 eine Blockierschraube 2 eingedreht. Diese ist in Fig. 2 in Draufsicht zu erkennen. Um zu verhindern, dass die Blockierschraube 2 ausweichen kann, sind zwei Stützwände 11, 12 vorgesehen. Die eine Stützwand 11 ist an der Rückseite des Rasthakens 10 angeformt und federt mit diesem zurück und vor. Die zweite Stützwand 12 dagegen ist an der Innenseite des Formteils 0 angeformt und federt nicht. Man vergleiche Fig. 1.

Soll das Formteil 0 vom Kabelkanal gelöst werden, muss lediglich die Blockierschraube 2 herausgeschraubt werden. Sobald dies geschehen ist, ist die Federfunktion des Rasthakens 10 wieder hergestellt. Seine Bewegung wird durch die Stützwände 11, 12 nicht behindert.

## Patentansprüche

1. Vorrichtung zur lösbaren Befestigung von Formteilen (0) auf Unterteilen von Kabelkanälen, wobei die Verbindung des Formteils (0) zum Unterteil des Kabelkanals mittels federnder Rastmittel (10) erfolgt und auf der Rückseite der Rastmittel (10) eine Blockierschraube (2) einschraubbar ist und die Blockierschraube (2) durch wenigstens eine Stützwand (11, 12) gehalten und gestützt ist, **dadurch gekennzeichnet, dass** eine erste Stützwand (11) an dem Rastmittel (10) angeformt ist.

2. Vorrichtung nach Anspruch 1, **dadurch gekennzeichnet, dass** die erste Stützwand (11) an der Rückseite des Rastmittels (10) angeformt ist.

3. Vorrichtung nach Anspruch 1 oder 2, **dadurch gekennzeichnet, dass** eine zweite Stützwand (12) am Formteil (0) angeformt ist und dass die zweite Stützwand (12) das Federn des Rastmittels (10) nicht behindert.

4. Vorrichtung nach Anspruch 3, **dadurch gekennzeichnet, dass** die zweite Stützwand (12) an der Innenseite des Formteils (0) angeformt ist.

5. Vorrichtung nach einem der Ansprüche 1 bis 4, **dadurch gekennzeichnet, dass** die Rastmittel (10) Nasen aufweisen, die sich hinter einer Halteleiste (1) am Kanalunterteil verhaken.

## Claims

1. Apparatus for releasably fixing moulded parts (0) to lower parts of cable ducts, wherein the moulded part (0) is connected to the lower part of the cable duct by means of resilient locking means (10) and a blocking screw (2) is screwed in on the rear side of the locking means (10) and the blocking screw (2) is retained and supported by at least one support wall (11, 12), **characterised in that** a first support wall (11) is formed on the locking means (10).

2. Apparatus according to Claim 1, **characterised in that** the first support wall (11) is formed on the rear side of the locking means (10).

3. Apparatus according to Claim 1 or 2, **characterised in that** a second support wall (12) is formed on the moulded part (0), and that the second support wall (12) does not impede the resilience of the locking means (10).

4. Apparatus according to Claim 3, **characterised in that** the second support wall (12) is formed on the inside of the moulded part (0).

5. Apparatus according to any one of Claims 1 to 4, **characterised in that** the locking means (10) comprise projections which hook behind a retaining strip (1) at the lower duct part.

## Revendications

1. Dispositif pour la fixation amovible de pièces moulées (0) sur des parties inférieures de goulottes de câblage, sachant que l'assemblage de la pièce moulée (0) avec la partie inférieure de la goulotte s'effectue à l'aide de moyens d'enclenchement (10) à effet de ressort et qu'une vis de blocage (2) peut être vissée sur le côté arrière des moyens d'enclenchement (10), et que la vis de blocage (2) est maintenue et soutenue par au moins une paroi de soutien (11, 12), **caractérisé en ce qu'**une première paroi de soutien (11) est formée sur le moyen d'enclenchement (10).

2. Dispositif selon la revendication 1, **caractérisé en ce que** la première paroi de soutien (11) est formée sur le côté arrière du moyen d'enclenchement (10).

3. Dispositif selon la revendication 1 ou 2, **caractérisé en ce qu'**une deuxième paroi de soutien (12) est formée sur la pièce moulée (0), et **en ce que** la deuxième paroi de soutien (12) ne fait pas obstacle à l'effet de ressort du moyen d'enclenchement (10).

4. Dispositif selon la revendication 3, **caractérisé en ce que** la deuxième paroi de soutien (12) est formée sur le côté intérieur de la pièce moulée (0).

5. Dispositif selon l'une des revendications 1 à 4, **caractérisé en ce que** les moyens d'enclenchement (10) présentent des ergots qui s'accrochent derrière une nervure de maintien (1) sur la partie inférieure de goulotte.
